(19) Europäisches Patentamt
European Patent Office
Office européen des brevets

(11) EP 4 387 296 A1

(12) EUROPEAN PATENT APPLICATION
published in accordance with Art. 153(4) EPC

(43) Date of publication:
**19.06.2024 Bulletin 2024/25**

(21) Application number: **22869071.5**

(22) Date of filing: **06.09.2022**

(51) International Patent Classification (IPC):
***H04W 8/22*** *(2009.01)* ***H04W 8/24*** *(2009.01)*

(52) Cooperative Patent Classification (CPC):
**H04W 8/22; H04W 8/24**

(86) International application number:
**PCT/CN2022/117147**

(87) International publication number:
**WO 2023/040700 (23.03.2023 Gazette 2023/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.09.2021 CN 202111085791**
**26.10.2021 CN 202111250477**

(71) Applicant: **Huawei Technologies Co., Ltd.**
**Shenzhen, Guangdong 518129 (CN)**

(72) Inventors:
- **WANG, Sihai**
  **Shenzhen, Guangdong 518129 (CN)**
- **QIN, Cheng**
  **Shenzhen, Guangdong 518129 (CN)**
- **YANG, Rui**
  **Shenzhen, Guangdong 518129 (CN)**
- **LI, Xueru**
  **Shenzhen, Guangdong 518129 (CN)**

(74) Representative: **Maiwald GmbH**
**Engineering**
**Elisenhof**
**Elisenstrasse 3**
**80335 München (DE)**

# (54) ARTIFICIAL INTELLIGENCE (AI) COMMUNICATION METHOD AND APPARATUS

(57) This application provides an artificial intelligence AI communication method, applied to any two devices that communicate in a communication system. The method includes: A first device obtains AI capability information. The AI capability information includes time and/or energy consumption for the first device to execute each of at least one reference AI unit. The first device sends the AI capability information to a second device. The method further includes: The first device receives configuration information sent by the second device. The configuration information indicates the first device to enable an AI communication mode, or the configuration information indicates at least one AI model, or the configuration information indicates a configuration parameter of at least one AI model, or the configuration information indicates a method for obtaining at least one AI model. In this way, the second device may evaluate a matching state between an AI capability of the first device and an AI model of the first device based on the AI capability information reported by the first device, so that simplicity, efficiency, and accuracy of an evaluation result of the second device can be improved.

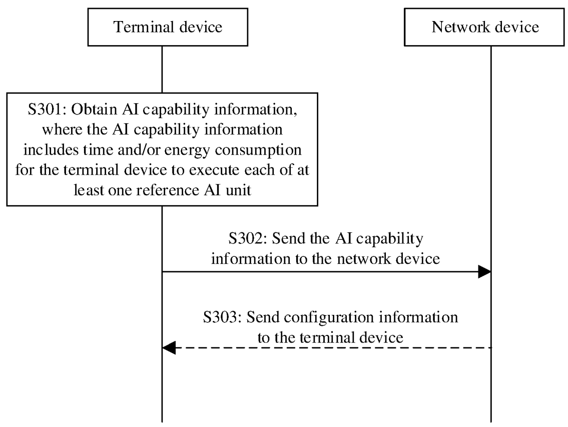


FIG. 3

EP 4 387 296 A1

## Description

This application claims priority to Chinese Patent Application No. 202111085791.9, filed with the China National Intellectual Property Administration on September 16, 2021, entitled "AI CAPABILITY EXPRESSION METHOD AND APPARATUS", and to Chinese Patent Application No. 202111250477.1, filed with the China National Intellectual Property Administration on October 26, 2021, entitled "ARTIFICIAL INTELLIGENCE AI COMMUNICATION METHOD AND APPARATUS", which are incorporated herein by reference in their entireties.

## TECHNICAL FIELD

This application relates to the field of communication technologies, and in particular, to an artificial intelligence AI communication method and apparatus.

## BACKGROUND

Artificial intelligence (artificial intelligence, AI) technology is a branch of computer science. It runs through a history of computer development and is an important development direction of information technology industry. With development of communication technologies, more applications are intellectualized through AI. Currently, the AI technology is introduced to a wireless communication system, and an AI module may be gradually used to replace a functional module in the wireless communication system. After the AI technology is introduced to the wireless communication system, a possible working mode is that a network device sends the AI model to a terminal device, and the terminal device receives the AI model from the network device and uses the AI model to perform wireless communication.

AI capabilities of different terminal devices are different. Therefore, the AI model delivered by the network device may not be executed by the terminal device. As a result, the AI model cannot be used for wireless communication.

## SUMMARY

This application provides an artificial intelligence AI communication method and apparatus, to better apply an AI technology to a wireless communication system.

According to a first aspect, this application provides an AI communication method. The method may be performed by a first device. The first device may be a terminal device or a receiver of an AI model in a communication system. The method may be implemented by using the following steps: The first device obtains AI capability information. The AI capability information includes time and/or energy consumption for the first device to execute each of at least one reference AI unit. The first device sends the AI capability information to a second device.

In this implementation, the first device sends the AI capability information of the first device to the second device, and the second device may evaluate a matching state between an AI model and an AI capability of the first device, to ensure feasibility of communication between the first device and the second device by using the AI model.

In a possible design, after the first device sends the AI capability information to the second device, the method further includes: The first device receives configuration information sent by the second device. The configuration information indicates the first device to enable an AI communication mode, or the configuration information indicates at least one AI model, or the configuration information indicates a configuration parameter of at least one AI model, or the configuration information indicates a method for obtaining at least one AI model.

In a possible design, the at least one AI model is determined based on the AI capability information.

In a possible design, the configuration information is response information of the AI capability information.

In a possible design, time at which the first device executes a first reference AI unit in the at least one reference AI unit is a first time value, a first time level, or a first time range, and energy consumption for the first device to execute the first reference AI unit in the at least one reference AI unit is a first energy consumption value, a first energy consumption level, or a first energy consumption range.

In a possible design, the AI capability information includes a quantity of input data used by the first device to execute each of the at least one reference AI unit.

In a possible design, the AI capability information includes one or more of the following: numerical precision of the input data used by the first device to execute each of the at least one reference AI unit; numerical precision of a weight of each of the at least one reference AI unit; and operation precision for the first device to execute each of the at least one reference AI unit.

In a possible design, resources used by the first device to execute each of the at least one reference AI unit are all available computing resources of the first device. Based on the foregoing AI capability information, the second device can more conveniently, efficiently, and accurately evaluate a matching state between the AI capability of the first device and complexity of the AI model, to better perform AI communication.

In a possible design, the AI capability information includes at least one of an upper time limit value, an upper energy consumption limit value, and resource usage that are used by the first device to execute the AI model. In this way, the first device may send, to the second device, at least one of upper time limit value information, upper energy consumption limit value information, and resource usage information that are used by the first device to execute the AI model, to notify the second device of a time budget requirement, an energy consumption limit, or the resource usage for the first device to execute the AI model.

In a possible design, before the first device sends the AI capability information to the second device, the method further includes: The first device receives request information from the second device, where the request information is used to request the first device to send the AI capability information to the second device.

In a possible design, that the first device sends the AI capability information to a second device includes: The first device periodically sends the AI capability information to the second device; or the first device sends the AI capability information to the second device when the first device accesses a network in which the second device is located; or the first device sends the AI capability information to the second device when the first device establishes a communication connection to the second device; or the first device sends the AI capability information to the second device when a computing resource used by the first device to execute the AI model changes.

According to a second aspect, this application provides an AI communication method. The method may be performed by a second device. The second device may be a network device or a sender of an AI model in a communication system. The method may be implemented by using the following steps: The second device receives AI capability information sent by a first device, where the AI capability information includes time and/or energy consumption for the first device to execute at least one reference AI unit.

In a possible design, after the second device receives the AI capability information sent by the first device, the method further includes: The second device sends configuration information to the first device. The configuration information indicates the first device to enable an AI communication mode, or the configuration information indicates at least one AI model, or the configuration information indicates a configuration parameter of at least one AI model, or the configuration information indicates a method for obtaining at least one AI model. The at least one AI model is determined based on the AI capability information.

In a possible design, the at least one AI model is determined based on the AI capability information.

In a possible design, the configuration information is response information of the AI capability information.

In a possible design, time at which the first device executes a first reference AI unit in the at least one reference AI unit is a first time value, a first time level, or a first time range, and energy consumption for the first device to execute the first reference AI unit in the at least one reference AI unit is a first energy consumption value, a first energy consumption level, or a first energy consumption range.

In a possible design, the AI capability information includes a quantity of input data used by the first device to execute each of the at least one reference AI unit.

In a possible design, the AI capability information includes one or more of the following: numerical precision of the input data used by the first device to execute each of the at least one reference AI unit; numerical precision of a weight of each of the at least one reference AI unit; and operation precision for the first device to execute each of the at least one reference AI unit.

In a possible design, the AI capability information includes at least one of an upper time limit value, an upper energy consumption limit value, and resource usage that are used by the first device to execute the AI model.

In a possible design, before the second device receives the AI capability information sent by the first device, the method further includes: The second device sends request information to the first device, where the request information is used to request the first device to send the AI capability information to the second device.

In a possible design, when the configuration information indicates the at least one AI model, or the configuration information indicates the configuration parameter of the at least one AI model, or the configuration information indicates the method for obtaining the at least one AI model, before the second device sends the configuration information to the first device, the method further includes: The second device determines the at least one AI model based on the AI capability information.

In a possible design, that the second device determines the at least one AI model based on the AI capability information includes: The second device determines the at least one AI model based on the AI capability information and M groups of similarity information corresponding to M AI models. Each group of similarity information in the M groups of similarity information is similarity information of one of the M AI models and K reference AI units. M and K are positive integers.

In a possible design, the M AI models are pre-stored in the second device or another device; or the M AI models are obtained by the second device from another device; or the M AI models are generated by the second device.

In a possible design, a first group of similarity information in the M groups of similarity information is similarity information of a first AI model and the K reference AI units. The first group of similarity information includes first similarity information, and the first similarity information is associated with a first ratio and/or a second ratio. The first ratio is a ratio of a total quantity of layers that are in the first AI model and that are the same as a first reference AI unit to a total quantity of layers of the first AI model. The second ratio is a ratio of a total computing amount of the layers that are in the first AI model and that are the same as the first reference AI unit to a total computing amount of the first AI model. The M AI models include the first AI model, and the K reference AI units include the first reference AI unit.

In another possible design, the first group of similarity information in the M groups of similarity information is similarity information of the first AI model and the K reference AI units. The first group of similarity information includes the first similarity information, and the first similarity information is associated with the first ratio and/or the second ratio. The first ratio is a ratio of a total quantity of layers of units that are in the first AI model and that are the same as the first reference AI unit to the total quantity of layers of the first AI model. The second ratio is a ratio of a total computing amount of units that are in the first AI model and that are the same as the first reference AI unit to the total computing amount of the first AI model. The M AI models include the first AI model, and the K reference AI units include the first reference AI unit.

For beneficial effects of the second aspect and possible designs of the second aspect, refer to descriptions corresponding to the first aspect. Details are not described herein again.

According to a third aspect, this application provides an AI communication method. The method may be performed by a first device. The first device may be a terminal device or a receiver of an AI model in a communication system. The method may be implemented in the following steps: The first device receives AI model information sent by a second device, where the AI model information includes M groups of similarity information corresponding to M AI models. Each group of similarity information in the M groups of similarity information is similarity information between one of the M AI models and K reference AI units, and M and K are positive integers. The first device sends feedback information to the second device based on the AI model information.

In this implementation, the second device sends the AI model information to the first device, and the first device may evaluate a matching state between the AI model and an AI capability of the first device, to ensure feasibility of communication between the first device and the second device by using the AI model.

In a possible design, a first group of similarity information in the M groups of similarity information is similarity information of a first AI model and the K reference AI units. The first group of similarity information includes first similarity information, and the first similarity information is associated with a first ratio and/or a second ratio. The first ratio is a ratio of a total quantity of layers that are in the first AI model and that are the same as a first reference AI unit to a total quantity of layers of the first AI model. The second ratio is a ratio of a total computing amount of the layers that are in the first AI model and that are the same as the first reference AI unit to a total computing amount of the first AI model. The M AI models include the first AI model, and the K reference AI units include the first reference AI unit.

In another possible design, the first group of similarity information in the M groups of similarity information is similarity information of the first AI model and the K reference AI units. The first group of similarity information includes the first similarity information, and the first similarity information is associated with the first ratio and/or the second ratio. The first ratio is a ratio of a total quantity of layers of units that are in the first AI model and that are the same as the first reference AI unit to the total quantity of layers of the first AI model. The second ratio is a ratio of a total computing amount of units that are in the first AI model and that are the same as the first reference AI unit to the total computing amount of the first AI model. The M AI models include the first AI model, and the K reference AI units include the first reference AI unit.

In a possible design, the AI model information includes one or more of the following: numerical precision of input data used when each of the M AI models is executed; numerical precision of weights of each of the M AI models; and operation precision during executing each of the M AI models.

In a possible design, the AI model information includes a total quantity of layers and/or a total computing amount of each of the M AI models.

Based on the foregoing AI model information, the first device can more conveniently, efficiently, and accurately evaluate a matching state between the AI capability of the first device and complexity of the AI model, to better perform AI communication.

In a possible design, the AI model information includes an upper time limit value for executing the AI model. In this way, the first device may obtain a time budget requirement of the second device for the first device to execute a to-be-delivered AI model, to better determine whether to enable the AI communication mode or select an appropriate AI model.

In a possible design, the feedback information indicates the first device to request to enable the AI communication mode, or the feedback information indicates an evaluation result of at least one of the M AI models, or the feedback information requests the second device to send the at least one AI model to the first device, where the M AI models include the at least one AI model.

In a possible design, after the first device sends the feedback information to the second device based on the AI model information, the method further includes: The first device receives configuration information sent by the second device. The configuration information indicates the first device to enable the AI communication mode, or the configuration information indicates at least one AI model, or the configuration information indicates a configuration parameter of at least one AI model, or the configuration information indicates a method for obtaining at least one model, where the M AI models include the at least one AI model.

In a possible design, before the first device receives the AI model information sent by the second device, the method further includes: The first device sends request information to the second device, where the request information is used to request the second device to send the AI model information to the first device.

In a possible design, before the first device sends the feedback information to the second device based on the AI model information, the method further includes: The first device determines the feedback information based on the AI model information and the AI capability information of the first device.

In a possible design, the AI capability information of the first device indicates time and/or energy consumption for the first device to execute the at least one reference AI unit. For a possible design of the AI capability information, refer to related descriptions in the first aspect. Details are not described herein again.

According to a fourth aspect, this application provides an AI communication method. The method may be performed by a second device. The second device may be a network device or a sender of an AI model in a communication system. The method may be implemented by using the following steps: The second device sends AI model information to a first device, where the AI model information includes M groups of similarity information corresponding to M AI models. Each group of similarity information in the M groups of similarity information is similarity information between one of the M AI models and K reference AI units, and M and K are positive integers. The second device receives feedback information sent by the first device, where the feedback information is determined based on the AI model information.

In a possible design, a first group of similarity information in the M groups of similarity information is similarity information of a first AI model and K reference AI units. The first group of similarity information includes first similarity information, and the first similarity information is associated with a first ratio and/or a second ratio. The first ratio is a ratio of a total quantity of layers that are in the first AI model and that are the same as a first reference AI unit to a total quantity of layers of the first AI model. The second ratio is a ratio of a total computing amount of the layers that are in the first AI model and that are the same as the first reference AI unit to a total computing amount of the first AI model. The M AI models include the first AI model, and the K reference AI units include the first reference AI unit.

In another possible design, the first group of similarity information in the M groups of similarity information is similarity information of the first AI model and the K reference AI units. The first group of similarity information includes the first similarity information, and the first similarity information is associated with the first ratio and/or the second ratio. The first ratio is a ratio of a total quantity of layers of units that are in the first AI model and that are the same as the first reference AI unit to the total quantity of layers of the first AI model. The second ratio is a ratio of a total computing amount of units that are in the first AI model and that are the same as the first reference AI unit to the total computing amount of the first AI model. The M AI models include the first AI model, and the K reference AI units include the first reference AI unit.

In a possible design, the AI model information includes one or more of the following: numerical precision of input data used when each of the M AI models is executed; numerical precision of weights of each of the M AI models; and operation precision during executing each of the M AI models.

In a possible design, the AI model information includes a total quantity of layers and/or a total computing amount of each of the M AI models.

In a possible design, the AI model information includes an upper time limit value for executing the AI model.

In a possible design, the feedback information indicates the first device to request to enable the AI communication mode, or the feedback information indicates an evaluation result of at least one of the M AI models, or the feedback information requests the second device to send the at least one AI model to the first device, where the M AI models include the at least one AI model.

In a possible design, after the second device receives the feedback information sent by the first device, the method further includes: The second device sends configuration information to the first device, where the configuration information indicates the first device to enable the AI communication mode, or the configuration information indicates at least one AI model, or the configuration information indicates a configuration parameter of at least one AI model, or the configuration information indicates a method for obtaining at least one AI model, where the M AI models include the at least one AI model.

In a possible design, before the second device sends the AI model information to the first device, the method further includes: The second device receives request information sent by the first device, where the request information is used to request the second device to send the AI model information to the first device.

In a possible design, the M AI models are pre-stored in the second device or another device, or the M AI models are obtained by the second device from another device, or the M AI models are generated by the second device.

For beneficial effects of the fourth aspect and possible designs, refer to descriptions corresponding to the third aspect. Details are not described again herein.

According to a fifth aspect, this application further provides a communication apparatus. The communication apparatus may be a terminal device, or the communication apparatus may be a receiver device in a communication system. The communication apparatus has a function of implementing the first device in either of the first aspect or the third aspect. The function may be implemented by hardware, or may be implemented by hardware executing corresponding software. The hardware or the software includes one or more modules corresponding to the function.

In a possible design, a structure of the communication apparatus includes a transceiver unit and a processing unit. These units may perform corresponding functions of the first device in either of the first aspect or the third aspect. For details, refer to detailed descriptions in the method examples. Details are not described herein again.

In a possible design, a structure of the communication apparatus includes a transceiver and a processor, and optionally, further includes a memory. The transceiver is configured to receive and send data, and is configured to communicate and interact with another device in the communication system. The processor is configured to support the communication apparatus in performing corresponding functions of the first device in either of the first aspect or the third aspect. The memory is coupled to the processor, and stores program instructions and data that are necessary for the communication apparatus.

According to a sixth aspect, this application further provides a communication apparatus. The communication apparatus may be a network device, or the communication apparatus may be a transmitter device in a communication system. The communication apparatus has a function of implementing the second device in either of the second aspect or the fourth aspect. The function may be implemented by hardware, or may be implemented by hardware executing corresponding software. The hardware or the software includes one or more modules corresponding to the function.

In a possible design, a structure of the communication apparatus includes a transceiver unit and a processing unit. These units may perform corresponding functions of the second device in either of the second aspect or the fourth aspect. For details, refer to detailed descriptions in the method examples. Details are not described herein again.

In a possible design, a structure of the communication apparatus includes a transceiver and a processor, and optionally, further includes a memory. The transceiver is configured to receive and send data, and is configured to communicate and interact with another device in the communication system. The processor is configured to support the communication apparatus in performing corresponding functions of the second device in either of the second aspect or the fourth aspect. The memory is coupled to the processor, and stores program instructions and data that are necessary for the communication apparatus.

According to a seventh aspect, an embodiment of this application provides a communication system. The communication system may include the first device and the second device that are mentioned above.

According to an eighth aspect, an embodiment of this application provides a computer-readable storage medium. The computer-readable storage medium stores program instructions. When the program instructions are run on a computer, the computer is enabled to perform the method according to any one of the first aspect to the fourth aspect and any possible design of the first aspect to the fourth aspect. For example, the computer-readable storage medium may be any usable medium that can be accessed by a computer. The following provides an example but does not impose a limitation: The computer-readable medium may include a non-transitory computer-readable medium, a random-access memory (random-access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a ninth aspect, an embodiment of this application provides a computer program product including computer program code or instructions. When the computer program product runs on a computer, the computer is enabled to implement the method according to any one of the first aspect to the fourth aspect and any possible design of the first aspect to the fourth aspect.

According to a tenth aspect, this application further provides a chip, including a processor. The processor is coupled to a memory, and is configured to read and execute program instructions stored in the memory, so that the chip implements the method according to any one of the first aspect to the fourth aspect and any possible design of the first aspect to the fourth aspect.

For each aspect of the fifth aspect to the tenth aspect and technical effects that may be achieved by each aspect, refer to descriptions of technical effects that may be achieved by each possible solution in the first aspect to the fourth aspect. Details are not described herein again.

## BRIEF DESCRIPTION OF DRAWINGS

FIG. 1 is a schematic diagram of an architecture of a communication system according to this application;

FIG. 2 is a schematic diagram of a process in which a network device and a terminal device perform wireless communication by using an AI model according to an embodiment of this application;

FIG. 3 is a schematic flowchart 1 of an AI communication method according to an embodiment of this application;
FIG. 4 is a schematic flowchart of evaluating a matching degree between an AI capability and an AI model by a network device according to an embodiment of this application;
FIG. 5 is a schematic flowchart 2 of an AI communication method according to an embodiment of this application;
FIG. 6 is a schematic flowchart of evaluating a matching degree between an AI capability and an AI model by a terminal device according to an embodiment of this application;
FIG. 7 is a schematic diagram 1 of a structure of a communication apparatus according to an embodiment of this application; and
FIG. 8 is a schematic diagram 2 of a structure of a communication apparatus according to an embodiment of this application.

## DESCRIPTION OF EMBODIMENTS

The following further describes technical solutions in this application in detail with reference to accompanying drawings.

The technical solutions provided in this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, and the like. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

Embodiments of this application provide an artificial intelligence AI communication method and apparatus. The method and the apparatus in this application are based on a same technical concept. Because the method and the apparatus have a similar principle for resolving the problem, mutual reference may be made between apparatus implementations and method implementations. Repeated descriptions are not provided again.

In descriptions of this application, terms such as "first" and "second" are merely used for distinction and description, and shall not be understood as an indication or implication of relative importance or an indication or implication of an order.

In descriptions of this application, "at least one (type)" refers to one or more (types), and "a plurality of (types)" refers to two or more (types).

In descriptions of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in descriptions of embodiments of this application, "a plurality of" means two or more. To describe the technical solutions in embodiments of this application more clearly, the following describes in detail, with reference to the accompanying drawings, the artificial intelligence AI communication method and apparatus provided in embodiments of this application.

FIG. 1 is a schematic diagram of a wireless communication system to which embodiments of this application are applicable. As shown in FIG. 1, the wireless communication system may include at least one network device, for example, a network device 111 and a network device 112 shown in FIG. 1. The wireless communication system may further include at least one terminal device, for example, a terminal device 121, a terminal device 122, a terminal device 123, a terminal device 124, a terminal device 125, a terminal device 126, and a terminal device 127 shown in FIG. 1. A plurality of antennas may be configured for the network device and the terminal device. The network device and the terminal device may communicate with each other by using a multi-antenna technology.

When the network device communicates with the terminal device, the network device may manage one or more cells, and there may be an integer quantity of terminal devices in one cell. It should be noted that a cell may be understood as an area within coverage of radio signals of the network device.

This application may be applied to a scenario in which a network device communicates with a terminal device. For example, the network device 111 may communicate with the terminal device 121, the terminal device 122, and the terminal device 123. For another example, the network device 111 and the network device 112 may communicate with the terminal device 124. This application may be further applied in a scenario in which a terminal device communicates with another terminal device. For example, the terminal device 122 may communicate with the terminal device 125. This application may be further applied in a scenario in which a network device communicates with another network device. For example, the network device 111 may communicate with the network device 112.

It should be understood that FIG. 1 is merely a simplified schematic diagram of an example for ease of understanding, and this application is not limited thereto. Embodiments of this application are applicable to any communication scenario in which a transmitter device communicates with a receiver device.

The terminal device in embodiments of this application may also be referred to as user equipment (user equipment, UE), an access terminal, a user unit, a user station, a mobile station, a mobile console, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device with a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile network (public land mobile network, PLMN), and the like. This is not limited in embodiments of this application.

As an example instead of a limitation, the terminal device in embodiments of this application may alternatively be a wearable device. The wearable device may also be referred to as a wearable intelligent device, and is a general term for wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not only a hardware device, but also implements a powerful function through software support, data exchange, and cloud interaction. Generalized wearable intelligent devices include full-function and large-size devices that can implement complete or partial functions without depending on smartphones, such as smart watches or smart glasses, and devices that focus on only one type of application function and need to work with other devices such as smartphones, for example, various smart bands or smart jewelry for monitoring physical signs.

In embodiments of this application, an apparatus configured to implement a function of the terminal device may be a terminal device, or may be an apparatus, for example, a chip or a chip system, that can support the terminal device in implementing the function. The apparatus may be mounted in the terminal device. In embodiments of this application, the chip system may include a chip, or may include a chip and another discrete device.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover various names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master station, a secondary station, a multi-mode wireless (multi-mode wireless, MMW) node, a home base station, a network controller, an access node, a radio node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be a device including a CU or a DU, or a device including a CU and a DU, or a device including a control plane CU node (a central unit-control plane (central unit-control plane, CU-CP)), a user plane CU node (a central unit-user plane (central unit-user plane, CU-UP)), and a DU node.

The network device and the terminal device may be deployed on land, including an indoor or outdoor scenario and a handheld or vehicle-mounted scenario, or may be deployed on water, or may be deployed on an airplane, a balloon, and a satellite in the air. Scenarios in which the network device and the terminal device are located are not limited in embodiments of this application.

AI technologies can be combined with wireless air interfaces to improve wireless network performance. An example is AI-based channel estimation and signal detection. The signal detection may be a process of extracting a received signal including interference noise from a radio channel, and the channel estimation is a process of estimating a model parameter of an assumed channel model from a received signal. Another example is an AI-based end-to-end communication link design. Still another example is an AI-based channel state information (channel state information, CSI) feedback solution, and CSI is encoded by using a neural network and fed back to the network device.

The AI-based channel state information (channel state information, CSI) feedback solution is used as an example to describe a process in which the network device and the terminal device perform wireless communication by using an AI model. As shown in (a) in FIG. 2, an AI encoder and a corresponding AI decoder may be deployed in the network device. The network device may send or deliver the AI encoder to the terminal device, or indicate the terminal device to obtain the AI encoder, so that the terminal device subsequently performs CSI encoding by using the AI encoder. As shown in (b) in FIG. 2, the terminal device may encode the CSI by using the AI encoder, and send encoded information to the network device. Then, the network device may use the AI decoder to decode the information encoded by the terminal device, to obtain restored information. It should be noted that the AI encoder can also be used as an AI model for information encoding, and the AI decoder can also be used as an AI model for information decoding.

There are various AI models. Different AI models can be used in different application scenarios. Usually, the AI model may be implemented based on a neural network (neural network) model. The neural network model is a mathematical computing model that imitates a behavior feature of a human brain neural network and performs distributed parallel information processing. Some complex neural network models may include a large quantity of parameters or a large computing amount, and a capability (for example, a computing capability, a storage capability, or energy) of the terminal device may be limited. Therefore, before AI communication is performed between the network device and the terminal device, it needs to be ensured that an AI capability of the terminal device can support execution (or referred to as running and processing) of an AI model sent by the network device. For example, a storage capability of the terminal device can accommodate the AI model, a computing capability of the terminal device can support computing of the AI model within required time, and running power consumption (or referred to as energy consumption) for the terminal device to execute the AI model is within an expected acceptable range.

Generally, an upper limit of a computing latency of the AI model $t_l$ (namely, an upper limit of inference completion time of the AI model) is known. Therefore, in a solution, a matching state between the AI model and the AI capability of the terminal device may be evaluated by comparing the computing capability of the terminal device $C_{UE}$ with a computing complexity of the AI model $C_M$. When $C_M/C_{UE} + t_{th} \leq t_l$, it indicates that the AI model can complete computing within a required latency. That is, computing complexity of the AI model matches the computing capability of the terminal device. Otherwise, it is considered that the complexity of the AI model does not match the computing capability of the terminal device. The computing capability of the terminal device $C_{UE}$ may be in a unit of floating-point operations per second (floating-point operations per second, FLOPS), and the computing complexity of the AI model $C_M$ may be in a unit of floating-point operations (floating-point operations, FLOP), and $t_{th}$ is a margin that can be configured in advance.

However, internal structures of AI models for a same purpose may differ greatly. During actual computing, due to different hardware computing rates, data scheduling delays, and the like, computing efficiency of AI models of different structures may differ greatly. In addition, a large quantity of software conversion and optimization are required from AI models to hardware computing resources. Different software conversion and optimization methods bring different computing efficiency. In addition, implementation of different AI computing hardware of the terminal device may also bring different computing efficiency of the AI model. Therefore, factors such as the foregoing AI model structure, software environment, and hardware implementation may cause a computing efficiency deviation of hundreds of times. It may be difficult to evaluate an actual matching state between the AI model and the AI capability of the terminal device only by configuring the margin $t_{th}$. For example, an excessively large value of $t_{th}$ may waste computing resources, and an excessively small value of $t_{th}$ may result in that execution of the AI model cannot be completed within an upper latency limit. In addition, when the AI model structure, the software environment, the hardware implementation are different, the value of $t_{th}$ may also be different.

In another solution, terminal hardware information, for example, a simulator of the terminal device, may be configured on a matching server. After obtaining detailed information about the AI model and the computing latency, the matching server may obtain an accurate evaluation result of the matching state between the complexity of the AI model and the AI capability of the terminal device. However, in this solution, a matching server and a corresponding interaction protocol need to be introduced. Therefore, a network structure and an interaction process are complex, and at the same time, costs and an evaluation latency are increased.

Based on this, this application provides an AI communication method and apparatus, to evaluate a matching state between the complexity of the AI model and the AI capability of the terminal device, and ensure feasibility of using the AI model to perform a communication service.

It should be noted that this application may be applied to a scenario in which any two devices (the first device and the second device) in a communication system communicate with each other. The first device may have computing hardware for executing the AI model, and is ready to obtain the AI model from the second device and use the AI model. The second device may have the AI model, and is ready to send the AI model to the first device for use. For example, the first device is the terminal device 121, the terminal device 122, or the terminal device 123 in FIG. 1, and the second device is the network device 111 in FIG. 1. For another example, the first device is the terminal device 122 in FIG. 1, and the second device is the terminal device 125 in FIG. 1. For still another example, the first device is the network device 111 in FIG. 1, and the second device is the network device 112 in FIG. 1.

In embodiments shown below, for ease of understanding and description, interaction between the network device and the terminal device is used as an example to describe in detail the method provided in embodiments of this application.

The method and related apparatus provided in embodiments of this application are described below in detail with reference to the accompanying drawings. It should be noted that a presentation sequence of embodiments of this application merely represents a sequence of the embodiments, but does not represent superiority or inferiority of the technical solutions provided in the embodiments.

Based on the foregoing descriptions, an embodiment of this application provides an AI communication method, which is applicable to the communication system shown in FIG. 1. As shown in FIG. 3, the method may include but is not limited to the following steps.

S301: A terminal device obtains AI capability information, where the AI capability information includes time and/or energy consumption for the terminal device to execute each of at least one reference AI unit.

For example, when a quantity of the at least one reference AI unit is 3 (a reference AI unit P1, a reference AI unit P2, and a reference AI unit P3), the AI capability information includes: time and/or energy consumption for the terminal device to execute the reference AI unit P1, time and/or energy consumption for the terminal device to execute the reference AI unit P2, and time and/or energy consumption for the terminal device to execute the reference AI unit P3.

Specifically, reference AI unit information may be standardized in advance or specified offline, and disclosed to the terminal device.

That the terminal device executes the reference AI unit may also be understood as that the terminal device performs an inference or training operation on the reference AI unit. For example, the reference AI unit may be at least one of a reference AI model, a reference AI module, and a reference AI operator. For example, an AI model may be a neural network model, an AI module may be a neural network module, and an AI operator may be a neural network operator. A common neural network model is, for example, a ResNet series, a MobileNet series, or a Transformer series. The neural network model includes layers of operators (neural network operators). A current neural network model (typically, a ResNet series model) is usually designed in a modular manner. That is, the neural network model includes a series of modules (a neural network module) and a neural network operator. It may be considered that the AI module includes the AI operator, and the AI model includes the AI module and/or the AI operator.

Optionally, the time and/or energy consumption for the terminal device to execute each reference unit may be represented by an actual value, an approximate value, a level (for example, low/medium/high, or 1/2/3/4), or a range. Specifically, the at least one reference AI unit may include a first reference AI unit, time at which the terminal device executes the first reference AI unit may be a first time value, a first time level, or a first time range, and energy consumption for the terminal device to execute the first reference AI unit may be a first energy consumption value, a first energy consumption level, or a first energy consumption range.

In an implementation, the terminal device may execute the at least one reference AI unit, and obtain AI capability information of the at least one reference AI unit. In another implementation, the foregoing process of executing the at least one AI reference unit may be completed in a device that has an AI capability the same as or similar to that of the terminal device, or a simulator that can truly reflect the AI capability of the terminal device. Specifically, an error of a computing result obtained in the device that has the AI capability the same as or similar to that of the terminal device or the simulator may not exceed an expected value. In this case, the terminal device may obtain the AI capability information from another device or simulator. In still another implementation, time and/or energy consumption information for the terminal device to execute the at least one AI reference unit may be set before delivery.

S302: The terminal device sends the AI capability information to a network device. Correspondingly, the network device receives the AI capability information sent by the terminal device.

Optionally, the AI capability information sent by the terminal device may include a quantity of input data used by the terminal device to execute the at least one reference AI unit. The quantity of input data may also be referred to as a quantity of samples. Usually, when performing model training, the terminal device executes a batch (batch) of samples at a time, and a sample batch size determines a quantity of samples in one training. When different quantities of input data are used, the terminal device obtains different computing efficiency.

Optionally, the AI capability information sent by the terminal device may further include at least one of the following: numerical precision of the input data used by the terminal device (or another device having a same AI capability as the terminal device, or a simulator) to execute each of the at least one reference AI unit; numerical precision of a weight (or referred to as a weight or a coefficient) of each of the at least one reference AI unit; and operation precision for the terminal device (or another device having a same AI capability as the terminal device, or a simulator) to execute each of the at least one reference AI unit.

The neural network may include a neural unit. The neural unit may be an operation unit that uses $x_s$ and an intercept 1 as input data. An output of the operation unit may be: $h_{W,b}(x) = f(W^T x) = f(\sum_{s=1}^{n} W_s x_s + b)$. s=1, 2, ..., or n. n is a natural number, $W_s$ is a weight of $x_s$, and b is an offset of the neural unit (which may also be considered as a weight) Numerical precision of the input data and the weight affects computing efficiency of the terminal device. The numerical precision may be, for example, int (integer) 8, int 16, float (floating point type) 16, or the like. The numerical precision may also be equivalently represented as multiplication and addition operation precision. The operation precision also affects computing efficiency of the terminal device. For example, the operation precision may be int 8, int 16, float 16, or the like.

In a possible implementation, resources used by the terminal device to execute each of the at least one reference AI unit are all available computing resources of the terminal device. There may be a plurality of types of running hardware of the terminal device, for example, a central processing unit (central processing unit, CPU), a graphics processing unit (graphics processing unit, GPU), an embedded neural-network processing unit (neural-network processing unit, NPU), or a field programmable gate array (field programmable gate array, FPGA). If the terminal device supports heterogeneous computing, the running hardware may be a combination of the foregoing plurality of types. The heterogeneous computing means that an AI model is distributed on a plurality of types of computing units for execution. For example, the AI model is distributed and executed on three computing units: a CPU, a GPU, and an FPGA. Therefore, computing resources available to the terminal device may include one or more of a CPU resource, a GPU resource, and an FPGA resource.

In another possible implementation, resources used by the terminal device to execute each of the at least one reference AI unit are a part of all available computing resources of the terminal device. It may be understood that a ratio of computing resources used by the terminal device to execute the reference AI unit affects the AI capability information of the terminal device (namely, the time and/or energy consumption information for the terminal device to execute the at least one AI reference unit).

In this implementation, Manner 1: The terminal device may convert, based on a ratio of used computing resources to all available computing resources, the computed completion time or consumed energy for executing each of the at least one reference AI unit, to obtain finally reported AI capability information. Manner 2: The terminal device may report, to the network device, information about the ratio of used computing resources to all available computing resources, so that the network device may convert, based on the resource ratio information, the AI capability information reported by the terminal device. Optionally, the AI capability information sent by the terminal device may include (or indicate) a ratio of computing resources used by the terminal device to execute each of the at least one reference AI unit to all available computing resources of the terminal device, or the terminal device may separately send the resource ratio information to the network device in other signaling.

Optionally, a process in which the terminal device executes the at least one reference AI unit may be completed when the terminal device is delivered from a factory.

It should be noted that information included in the AI capability information may be included in same signaling, or may be included in different signaling, and may be referred to as dedicated capability information of the terminal device.

When the information included in the AI capability information is in the same signaling, the terminal device may report the AI capability information to the network device at a time. For example, the terminal device sends first information to the network device, where the first information may include or indicate the AI capability information, or the first information is the AI capability information.

When the information included in the AI capability information is in different signaling, the terminal device may report the AI capability information to the network device for one or more times. Example 1: The terminal device reports, to the network device for one or more times, different capabilities such as time and/or energy consumption for executing the AI unit, a quantity of input data, and precision of the input data. For example, the terminal device sends the first information to the network device, where the first information includes or indicates the time and/or energy consumption for the terminal device to execute each of the at least one reference AI unit. The terminal device sends second information to the network device, where the second information includes or indicates the quantity of input data used for executing each of the at least one reference AI unit. The AI capability information may include the first information and the second information. Example 2: The terminal device reports the AI capability information to the network device for one or more times. For example, the terminal device sends the first information to the network device, where the first information includes or indicates capability information such as the time and/or energy consumption for executing the AI unit, the quantity of input data, and the precision of the input data. The terminal device sends the second information to the network device, where the second information includes or indicates updated capability information. The AI capability information may include the first information and the second information.

In an implementation, as shown in FIG. 3, after step S302, that is, after the terminal device sends the AI capability information to the network device, the method further includes the following steps.

S303: The network device sends configuration information to the terminal device. Correspondingly, the terminal device receives the configuration information sent by the network device. In an embodiment, the configuration information is response information of the foregoing AI capability information.

Specifically, the configuration information may meet one or more of the following: The configuration information may indicate the terminal device to enable an AI communication mode. Further, AI communication may be performed between the terminal device and the network device. Alternatively, the configuration information may indicate at least one AI model. Further, the terminal device and the network device may perform AI communication by using the at least one AI model. Alternatively, the configuration information may indicate a configuration parameter of the at least one AI model. Alternatively, the configuration information may indicate a method for obtaining the at least one AI model. For example, the configuration information may indicate a download address or an obtaining address of the at least one AI model. The at least one AI model may be determined based on the AI capability information.

It may be understood that after receiving the AI capability information sent by the terminal device, the network device may not respond.

In an implementation, the terminal device sends the AI capability information to the network device. A specific triggering method may include:

Manner 1: The network device sends request information to the terminal device. Correspondingly, the terminal device receives the request information sent by the network device. The request information is used to request the terminal device to send (or report) the foregoing AI capability information to the network device.

Manner 2: The terminal device periodically sends the foregoing AI capability information to the network device. Alternatively, the terminal device sends the foregoing AI capability information to the network device at a predefined time interval or predefined specific time.

Manner 3: When the terminal device accesses a network in which the network device is located, the terminal device sends the AI capability information to the network device. That when the terminal device accesses a network in which the network device is located may also be described as that after the terminal device accesses the network in which the network device is located or that the terminal device accesses the network in which the network device is located within specific time. In addition, that the terminal device accesses a network in which the network device is located may also be understood as that the terminal device establishes a communication connection to the network device.

Manner 4: When the computing resource that may be used by the terminal device to execute the AI model changes (for example, increases or decreases), or a ratio of the computing resource that may be used by the terminal device to execute the AI model changes, the terminal device sends the AI capability information to the network device. Same as above, that when the computing resource that may be used by the terminal device to execute the AI model changes may also be described as that after the computing resource that may be used by the terminal device to execute the AI model changes, or be described as that the computing resource that may be used by the terminal device to execute the AI model changes within specific time. Details are not described herein again.

When the terminal device is in different application scenarios, complexity of an operation that needs to be completed is different, and the terminal device has different power consumption/energy requirements, time requirements, used resource requirements, and the like that can be accepted (or referred to as tolerated) for executing the AI model. In other words, in different application scenarios, a maximum time requirement, a maximum energy consumption requirement, or a resource usage requirement for the terminal device to execute the AI model are different. The maximum time requirement may be time within which the terminal device should complete executing the AI model. The maximum energy consumption requirement may be maximum energy consumption allowed by the terminal device to complete executing the AI model. The resource usage requirement may be a maximum ratio of resources that are allowed to be used by the terminal device to execute the AI model to available resources of the terminal device, or a hardware resource configuration that may be used by the terminal device to execute the AI model. It should be noted that the foregoing AI model execution by the terminal device is a process in which the terminal device executes the AI model in an AI communication mode, and does not limit a type of the AI model executed by the terminal device.

Further, when the terminal device is in different application scenarios, the terminal device may send the AI capability information to the network device. The AI capability information may include at least one of an upper time limit value, an upper energy consumption limit value, and resource usage that are used by the terminal device to execute the AI model. It may be understood that the upper time limit value is also referred to as an upper time limit, maximum time, or a maximum time requirement. The upper energy consumption limit value is also referred to as an upper energy consumption limit, a maximum energy consumption, or a maximum energy consumption requirement. The resource usage may be, for example, hardware resource configuration or a resource ratio upper limit value that may be used by the terminal device. The resource ratio upper limit value is also referred to as a resource ratio upper limit, a maximum resource ratio, or a maximum resource ratio requirement. Optionally, before the terminal device sends the AI capability information to the network device, the network device may further send query information to the terminal device. The query information indicates the terminal device to report one or more of the upper time limit value, the upper energy consumption limit value, and the resource usage that are used to execute the AI model.

It should be understood that when an application scenario of the terminal device changes, the terminal device may report, to the network device, at least one of information about the upper time limit value, the upper energy consumption limit value, and the resource usage that are used by the terminal device to execute the AI model, to notify the network device of at least one of a time budget requirement, an energy consumption limit, and a resource ratio consumption limit that are used by the terminal device to execute the AI model. In this case, the upper time limit value information, the upper energy consumption limit value information, or the resource usage information and the information reported in step S302 may be carried in different signaling.

In the foregoing implementation, the terminal device reports the AI capability information of the terminal device, so that the network device may evaluate, based on the AI capability information, a matching state between an AI capability of the terminal device and an AI model (for example, complexity of the AI model), to determine whether to enable the AI communication mode or deliver an appropriate AI model. This can improve simplicity, efficiency, and accuracy of an evaluation result of the network device, and AI communication can be better performed.

In the foregoing embodiment, after the terminal device sends the AI capability information of the terminal device to the network device, the network device may evaluate the AI capability of the terminal device and complexity of the AI model, and determine the configuration information.

FIG. 4 is an example of a flowchart of a method for evaluating a matching degree between an AI capability and an AI model by a network device. As shown in FIG. 4, before the terminal device obtains the AI capability information, in step S401, the terminal device and the network device may obtain the reference AI unit information.

As described above, the reference AI unit information may be standardized in advance or specified offline, and disclosed to the network device and the terminal device.

For example, an AI reference table may be standardized in advance or formulated offline. The AI reference table may include names, numbers, or indexes of N reference AI units (for example, an AI model, an AI module, or an AI operator), and structural description parameters of the N reference AI units. The structural description parameters of the N reference AI units may also be provided by referencing a reference document or a link. By using the AI reference table, the network device and the terminal device may uniformly understand network structures of the N reference AI units. Optionally, a specific weight coefficient value (weight) of each AI unit may not be defined, or may be predefined, or may be a random number. The AI reference table is disclosed to the terminal device and the network device in advance. Specifically, in step S301, the at least one reference AI unit executed by the terminal device may be K reference AI units in the N reference AI units, where N is a positive integer, and K is a positive integer not greater than N.

S402: The network device obtains similarity information of M AI models. M is a positive integer.

Optionally, the M AI models may be pre-stored in the network device or another device, or the M AI models are obtained by the network device from another device, or the M AI models are converted or generated by the network device by using an existing AI model.

Specifically, the network device obtains M groups of similarity information of the M AI models and the K reference AI units.

In an implementation, the M AI models include a first AI model, and the K reference AI units include a first reference AI unit. Similarity information corresponding to the first AI model is a first group of similarity information in the M groups of similarity information, the first group of similarity information includes first similarity information, and the first similarity information is associated with a first ratio and/or a second ratio. The first ratio is a ratio of a total quantity of layers that are in the first AI model and that are the same as the first reference AI unit to a total quantity of layers of the first AI model. The second ratio is a ratio of a total computing amount of the layers that are in the first AI model and that are the same as the first reference AI unit to a total computing amount of the first AI model.

In other words, the M groups of similarity information include M groups of similarity information corresponding to the M AI models. The first group of similarity information corresponding to the first AI model includes K pieces of similarity information corresponding to the first AI model and the K AI reference units.

Table 1 shows a common neural network model, that is, a residual neural network (residual neural network, ResNet) model. The AI model may include an AI module. For example, the ResNet-34 model shown in Table 1 includes

an AI module $\begin{bmatrix} 3 \times 3,64 \\ 3 \times 3,64 \end{bmatrix}$. Further, the AI module may include an AI operator. For example, the AI module $\begin{bmatrix} 3 \times 3,64 \\ 3 \times 3,64 \end{bmatrix}$ includes an AI operator [3 × 3,64] (a convolution operation operator).

**Table 1 ResNet neural network model**

| Quantity of layers | Output size | 18-layer | 34-layer | 50-layer | 101-layer | 152-layer |
|---|---|---|---|---|---|---|
| conv1 | 112×112 | 7×7, 64, stride 2 | | | | |
| con2_x | 56×56 | 3×3 max pool, stride 2 | | | | |
| | | $\begin{bmatrix}3\times3,64\\3\times3,64\end{bmatrix}\times 2$ | $\begin{bmatrix}3\times3,64\\3\times3,64\end{bmatrix}\times 3$ | $\begin{bmatrix}1\times1,64\\3\times3,64\\1\times1,256\end{bmatrix}\times 3$ | $\begin{bmatrix}1\times1,64\\3\times3,64\\1\times1,256\end{bmatrix}\times 3$ | $\begin{bmatrix}1\times1,64\\3\times3,64\\1\times1,256\end{bmatrix}\times 3$ |
| con3_x | 28×28 | $\begin{bmatrix}3\times3,128\\3\times3,128\end{bmatrix}\times 2$ | $\begin{bmatrix}3\times3,128\\3\times3,128\end{bmatrix}\times 4$ | $\begin{bmatrix}1\times1,128\\3\times3,128\\1\times1,512\end{bmatrix}\times 4$ | $\begin{bmatrix}1\times1,128\\3\times3,128\\1\times1,512\end{bmatrix}\times 4$ | $\begin{bmatrix}1\times1,128\\3\times3,128\\1\times1,512\end{bmatrix}\times 8$ |
| con4_x | 14×14 | $\begin{bmatrix}3\times3,256\\3\times3,256\end{bmatrix}\times 2$ | $\begin{bmatrix}3\times3,256\\3\times3,256\end{bmatrix}\times 6$ | $\begin{bmatrix}1\times1,256\\3\times3,256\\1\times1,1024\end{bmatrix}\times 6$ | $\begin{bmatrix}1\times1,256\\3\times3,256\\1\times1,1024\end{bmatrix}\times 23$ | $\begin{bmatrix}1\times1,256\\3\times3,256\\1\times1,1024\end{bmatrix}\times 36$ |
| con5_x | 7×7 | $\begin{bmatrix}3\times3,512\\3\times3,512\end{bmatrix}\times 2$ | $\begin{bmatrix}3\times3,512\\3\times3,512\end{bmatrix}\times 3$ | $\begin{bmatrix}1\times1,512\\3\times3,512\\1\times1,2048\end{bmatrix}\times 3$ | $\begin{bmatrix}1\times1,512\\3\times3,512\\1\times1,2048\end{bmatrix}\times 3$ | $\begin{bmatrix}1\times1,512\\3\times3,512\\1\times1,2048\end{bmatrix}\times 3$ |
| | 1×1 | average pool, 1000-d fc, softmax | | | | |
| FLOPs | | $1.8\times10^9$ | $3.6\times10^9$ | $3.8\times10^9$ | $7.6\times10^9$ | $11.3\times10^9$ |

For example, the first AI model is a ResNet-50 model (namely, a 50-layer ResNet model). When the first reference AI unit is a model, for example, the ResNet-34 model shown in Table 1, same layers in the ResNet-50 model and the ResNet-34 model are three layers of [3 × 3,64], four layers of [3 × 3,128], six layers of [3 × 3,256], three layers of [3 × 3,512], [7×7, 64, stride 2], and [3×3 max pool, stride 2]. There are 18 layers in total, and a ratio of same quantity of layers to a total quantity of layers of the ResNet-50 model is 18/50 = 9/25. That is, the first ratio is 9/25. When the first reference AI unit is a module, for example, a module $\begin{bmatrix} 1 \times 1{,}256 \\ 3 \times 3{,}256 \\ 1 \times 1{,}1024 \end{bmatrix}$, the ResNet-50 model includes six modules, and there are 18 layers in total. A ratio of the modules to the total quantity of layers of the ResNet-50 model is 18/50 = 9/25. That is, the first ratio is 9/25. When the first reference AI unit is an operator, for example, an operator [3 × 3,256], a same layer of the ResNet-50 model and the operator is [3 × 3,256]. There are six layers in total, and a ratio of the same layers to the total quantity of layers is 6/50 = 3/25. That is, the first ratio is 3/25. Similarly, the second ratio may be obtained by dividing the total computing amount (in units of FLOP) of these same layers by the total computing amount $3.8 \times 10^9$ FLOPs of the ResNet-50 model.

In another implementation, the M AI models include the first AI model, and the K reference AI units include the first reference AI unit. The similarity information corresponding to the first AI model is the first group of similarity information in the M groups of similarity information. The first group of similarity information includes first similarity information, and the first similarity information is associated with a first ratio and/or a second ratio. The first ratio is a ratio of a total quantity of layers of units that are in the first AI model and that are the same as the first reference AI unit to the total quantity of layers of the first AI model. The second ratio is a ratio of a total computing amount of units that are in the first AI model and that are the same as the first reference AI unit to the total computing amount of the first AI model.

For example, an example in which the first AI model is the ResNet-50 model shown in Table 1 is also used. When the first reference AI unit is a model, for example, the ResNet-34 model shown in Table 1, the ResNet-50 model is different from the ResNet-34 model. That is, the first AI model has no unit that is the same as the first reference AI unit. In this case, the first ratio is 0. When the first reference AI unit is a module, for example, a module $\begin{bmatrix} 1 \times 1{,}64 \\ 3 \times 3{,}64 \\ 1 \times 1{,}256 \end{bmatrix}$, a quantity of the modules included in the ResNet-50 model is 3. In this case, the first ratio is 3 × 3/50 = 9/50. When the first reference AI unit is a module, for example, a module $\begin{bmatrix} 3 \times 3{,}64 \\ 3 \times 3{,}64 \end{bmatrix}$, a quantity of the modules included in the ResNet-50 model is 0. In this case, the first ratio is 0. When the first reference AI unit is an operator, for example, an operator [3 × 3,64], a quantity of the operators included in the ResNet-50 model is 3. In this case, the first ratio is 3/50.

Optionally, the network device may perform local computing to obtain the similarity information of the M AI models. Alternatively, the computing process may be completed in another device, and further, the network device may obtain computing result from the another device.

S403: The network device evaluates the matching degree between the AI capability and the AI model.

After the foregoing step S302, that is, after the network device receives the AI capability information sent by the terminal device, the network device may evaluate, based on the AI capability information received in step S302, a matching state between the AI capability of the terminal device and the M AI models.

In some embodiments, the network device may obtain, through analog evaluation, one or more of expected completion time, expected power consumption, or a ratio of resources expected to be used in execution of the M models in the terminal device. For example, when the similarity is represented by the foregoing first ratio, it is assumed that a total quantity of layers of the first AI model is L0, and it is assumed that, in step S402, a similarity between the first AI model and a reference AI model K1 obtained by the network device is S1, a similarity between the first AI model and a reference AI module K2 is S2, and a similarity between the first AI model and a reference AI operator K3 is S3. In step S401, the terminal device and the network device may learn that a total quantity of layers of K1, K2, and K3 is respectively L1, L2, and L3 (L3=1, and a quantity of layers of an operator is 1). In step S302, the AI capability information sent by the terminal device to the network device includes completion time of executing the reference AI model, the reference AI module, and the reference AI operator by the terminal device, which are $t_1$, $t_2$ and $t_3$ respectively. In this case, the network device may evaluate that the expected completion time for executing the first AI model by the terminal device is $\frac{(S1*t_1/L1+S2*t_2/L2+S3*t_3/L3)*L0}{S1+S2+S3} + t_{th}$. When the similarity is represented by using the foregoing second ratio, L0, L1, L2, and L3 may represent a total computing amount. The network device may also obtain the foregoing result by using a similar solution. Details are not described herein again. A method for the network device to evaluate the expected energy consumption and the ratio of resources expected to be used in the execution of the first AI model by the terminal device may be obtained through analog evaluation. Details are not described herein again.

It should be understood that the foregoing description is an example method for the network device to evaluate matching degree between the AI capability of the terminal device and the AI model. In some other embodiments, the network device may perform more refined analysis by using the M models and a detailed structure of the reference AI unit, to obtain a more accurate evaluation result. This is not limited in this application.

Based on one or more of the foregoing expected completion time, the expected energy consumption, or the ratio of resources expected to be used obtained through evaluation, and the upper time limit value information, upper energy consumption limit value information, and resource usage information that are sent by the terminal device and that are used to execute the AI model, the network device may determine whether the M models match the AI capabilities of the terminal device. For example, if the expected completion time of the first AI model in the M models does not exceed the time budget requirement of the terminal device, the expected energy consumption does not exceed the energy consumption limit of the terminal device, and the ratio of resources expected to be used does not exceed the resource ratio limit of the terminal device, it may be determined that the first AI model matches the AI capability of the terminal device.

Further, as described in step S303, the network device may send the configuration information to the terminal device.

In step S303, when the configuration information indicates the at least one AI model, or the configuration information indicates a configuration parameter of the at least one AI model, or the configuration information indicates a method for obtaining the at least one AI model, before the network device sends the configuration information to the terminal device, the network device determines the at least one AI model based on the AI capability information. Specifically, in a case, the network device has only one AI model oriented to a current application. If the AI model matches the AI capability of the terminal device, the AI model is an AI model determined by the network device. In another case, the network device has more than one AI model oriented to a current application. The network device may select at least one AI model from AI models that match the AI capability of the terminal device, and send or configure the at least one AI model to the terminal device. A selection principle of the network device may be shortest expected completion time, minimum expected energy consumption, a minimum ratio of resources expected to be used, or a random principle. It may be understood that if the network device may determine the at least one AI model, it is considered that the network device may enable the AI communication mode.

In step S303, when the configuration information indicates the method for obtaining the at least one AI model, specifically, the network device may indicate a download address or an obtaining address of the at least one AI model. As described above, the M AI models may be pre-stored in another device (for example, a third device). In this case, the network device may indicate the terminal device to obtain the at least one AI model from the third device.

It should be noted that, in the embodiment shown in FIG. 4, for specific implementation processes of steps S301, S302, and S303, refer to related descriptions in the embodiment shown in FIG. 3. Details are not described herein again. In the foregoing embodiment, the terminal device sends the data obtained by performing the reference AI model, the AI module, or the AI operator to the network device as the AI capability information, so that the AI capability of the terminal device can be accurately represented, the network device obtains a more accurate evaluation result, and determines whether to enable AI communication or deliver the AI model.

The following briefly describes embodiments of this application by using an AI-based CSI feedback solution as an example.

The network device and the terminal device may first obtain a reference AI unit. Based on the reference AI unit, the terminal device may obtain the AI capability information described in step S301, and the network device may obtain the AI model similarity information described in step S402. Then, the terminal device may send the AI capability information obtained by the terminal device to the network device, so that the network device evaluates the matching degree between the AI capability and the AI model based on the AI capability information. After the evaluation is completed, the network device may send an appropriate AI encoder to the terminal device. After receiving the AI encoder, the terminal device may encode the CSI by using the AI encoder, and send encoded information to the network device. Then, the network device may use an AI decoder corresponding to the AI encoder to decode the information encoded by the terminal device, to obtain restored information.

An embodiment of this application further provides an AI communication method, applicable to the communication system shown in FIG. 1. As shown in FIG. 5, the method may include but is not limited to the following steps.

S501: A network device sends AI model information to a terminal device. Correspondingly, the terminal device receives the AI model information sent by the network device. The AI model information may indicate complexity information of each of the M AI models.

For example, the complexity information of each of the M AI models may be represented by similarity data. For example, the AI model information indicates M groups of similarity information (or referred to as similarity data) corresponding to M AI models. Each group of similarity information in the M groups of similarity information is similarity information of one of the M AI models and K reference AI units. The K reference AI units belong to N reference AI units, M and N are positive integers, and K is a positive integer less than or equal to N.

For example, when M=3 and K=5, the AI model information includes three groups of similarity information (a first group of similarity information, a second group of similarity information, and a third group of similarity information) corresponding to three AI models (Q1, Q2, and Q3). The first group of similarity information is similarity information between the AI model Q1 and five reference AI units. The second group of similarity information is similarity information between the AI model Q2 and the five reference AI units. The third group of similarity information is similarity information between the AI model Q3 and the five reference AI units.

Optionally, the M AI models may be pre-stored in the network device or another device, or the M AI models are obtained by the network device from another device, or the M AI models are converted or generated by the network device by using an existing AI model.

For example, the N reference AI units may be standardized in advance or specified offline, and are disclosed to the network device and the terminal device. For example, the N reference AI units may be in the AI reference table. For specific content of the AI reference table, refer to the foregoing descriptions.

In an implementation, the M AI models include a first AI model, and the K reference AI units include a first reference AI unit. Similarity information corresponding to the first AI model is a first group of similarity information in the M groups of similarity information. The first group of similarity information includes first similarity information, and the first similarity information is associated with a first ratio and/or a second ratio. The first ratio is a ratio of a total quantity of layers that are in the first AI model and that are the same as the first reference AI unit to a total quantity of layers of the first AI model. The second ratio is a ratio of a total computing amount of the layers that are in the first AI model and that are the same as the first reference AI unit to a total computing amount of the first AI model.

In another implementation, the M AI models include the first AI model, and the K reference AI units include the first reference AI unit. The similarity information corresponding to the first AI model is the first group of similarity information in the M groups of similarity information, the first group of similarity information includes the first similarity information, and the first similarity information is associated with the first ratio and/or the second ratio. The first ratio is a ratio of a total quantity of layers of units that are in the first AI model and that are the same as the first reference AI unit to the total quantity of layers of the first AI model. The second ratio is a ratio of a total computing amount of the layers that are in the first AI model and that are the same as the first reference AI unit to a total computing amount of the first AI model. For an example of the similarity information, refer to the foregoing related description. Details are not described herein again.

Optionally, the M groups of similarity information corresponding to the M AI models may be represented by using an actual value, an approximate value, a level, or a range. For example, the first similarity information may be a first similarity value, a first similarity level, or a first similarity range.

In an implementation, the network device may locally obtain the M groups of similarity information through computing. In another implementation, a process of computing the M groups of similarity information may be completed by a third device (for example, another network device or a third-party server), and the network device may obtain the M groups of similarity information from the third device.

Optionally, the AI model information sent by the network device may include at least one of the following: numerical precision of input data used by the network device or the third device to execute each of the M AI models; numerical precision of a weight (or referred to as a weight or a coefficient) of each of the M AI models; and operation precision for the network device or the third device to execute each of the M AI models.

Optionally, the AI model information sent by the network device may further include a total quantity of layers and a total computing amount of each of the M AI models. It may be understood that, more detailed information about the M AI models is obtained, so that the terminal device may more accurately evaluate complexity of the M AI models.

In different application scenarios, time budget information for executing the AI model varies. Further, the AI model information may further include the upper time limit value for executing the AI model, namely, time budget information for executing the to-be-delivered AI model, or a time period in which the AI model needs to be executed. It may be understood that the upper time limit value is also referred to as an upper time limit, maximum time, or a maximum time requirement.

It should be noted that information included in the AI model information may be included in same signaling, or may be included in different information. When the information included in the AI model information is in the same signaling, the network device may send the AI model information to the terminal device at a time. When the information included in the AI model information is in different signaling, the network device may send the AI model information to the terminal device for one or more times.

S502: The terminal device sends feedback information to the network device. Correspondingly, the network device receives the feedback information sent by the terminal device.

For example, the feedback information may meet one or more of the following: The feedback information may be used to request to enable the AI communication mode, or the feedback information may include or indicate an evaluation result of at least one of the M AI models, or the feedback information may request the network device to send the at least one AI model to the terminal device, where the at least one AI model belongs to the M AI models.

In an implementation, as shown in FIG. 5, before step S501, that is, before the network device sends the AI model information to the terminal device, the method further includes the following steps.

S500: The network device obtains the AI model information.

As described above, the network device may locally obtain the M groups of similarity information through computing, to obtain the AI model information. Alternatively, the network device may obtain the M groups of similarity information from the third device.

In an implementation, as shown in FIG. 5, after step S502, that is, after the terminal device sends the feedback information to the network device, the method further includes the following steps.

S503: The network device sends configuration information to the terminal device. Correspondingly, the terminal device receives the configuration information sent by the network device. The configuration information is response information of the feedback information.

Specifically, the configuration information may meet one or more of the following: The configuration information may indicate the terminal device to enable an AI communication mode. Further, AI communication may be performed between the terminal device and the network device. Alternatively, the configuration information may indicate at least one AI model. Further, the terminal device and the network device may perform AI communication by using the at least one AI model. Alternatively, the configuration information may indicate a method for obtaining the at least one AI model. For example, the configuration information may indicate a download address or an obtaining address of the at least one AI model. The at least one AI model is determined based on the feedback information.

When the configuration information indicates the method for obtaining the at least one AI model, as described above, the M AI models may be pre-stored in another device (for example, a third device). In this case, the network device may indicate the terminal device to obtain the at least one AI model from the third device.

It may be understood that after receiving the feedback information sent by the terminal device, the network device may not respond.

In an implementation, before step S501, that is, before the network device sends the AI model information to the terminal device, the method further includes: The terminal device sends request information to the network device, where the request information is used to request the network device to send the AI model information to the terminal device.

In the foregoing embodiment, after the network device sends the M groups of similarity information of the M AI models to the terminal device, the terminal device may perform complexity evaluation on the M AI models, to determine a matching state between the M AI models and the AI capability of the terminal device.

In the foregoing embodiment, before step S502, that is, before the terminal device sends the feedback information to the network device, the method further includes: The terminal device determines the feedback information based on the AI model information received in step S501 and the AI capability information of the terminal device. The following describes in detail a method for determining the feedback information by the terminal device by using an example of a specific embodiment.

FIG. 6 is an example of a flowchart of a method for evaluating a matching degree between an AI capability and an AI model by a terminal device. As shown in FIG. 6, before the network device obtains the AI model information, in step S601, the network device and the terminal device may obtain reference AI unit information.

S602: After obtaining the reference AI unit information, the terminal device obtains the AI capability information.

For a specific implementation of obtaining the reference AI unit information by the network device and the terminal device in step S601, refer to the description in step S401 in the foregoing embodiment. For a specific implementation of obtaining the AI capability information by the terminal device in step S602, refer to the description in step S301 in the foregoing embodiment. Details are not described herein again.

S603: The terminal device evaluates the matching degree between the AI capability and the AI model.

After step S501, that is, after the terminal device receives the AI model information sent by the network device, the terminal device may evaluate, based on the AI model information received in step S501, a matching state between the AI capability of the terminal device and the M AI models.

Similar to the foregoing embodiments, the terminal device may obtain, through analog evaluation, one or more of expected completion time, expected power consumption, or a ratio of resources expected to be used in execution of the M models in the terminal device. For example, when the similarity is represented by the foregoing first ratio, in step S501, the AI model information sent by the network device to the terminal device includes a total quantity L0 of layers of the first AI model and the similarity information. A similarity between the first AI model and a reference AI model K1 is S1, a similarity between the first AI model and a reference AI module K2 is S2, and a similarity between the first AI model and a reference AI operator K3 is S3. In step S601, the terminal device and the network device may learn that a total quantity of layers of K1, K2, and K3 is respectively L1, L2, and L3 (L3=1, and a quantity of layers of an operator is 1). In step S602, completion time of executing the reference AI model, the reference AI module, and the reference AI operator by the terminal device are respectively $t_1$, $t_2$ and $t_3$. In this case, the terminal device may evaluate that the expected completion time for executing the first AI model by the terminal device is $\frac{(S1*t_1/L1+S2*t_2/L2+S3*t_3/L3)*L0}{S1+S2+S3}+t_{th}$. When the similarity is represented by using the foregoing second ratio, L0, L1, L2, and L3 may represent a total computing amount. The network device may also obtain the foregoing result by using a similar solution. Details are not described herein again. A method for the terminal device to evaluate the expected energy consumption and the ratio of resources expected to be used in the execution of the first AI model by the terminal device may be obtained through analog evaluation. Details are not described herein again.

Based on one or more of the foregoing expected completion time, the expected power consumption, or the ratio of resources expected to be used obtained through evaluation, and the upper time limit value (namely, the time budget information) that is sent by the network device and that is used to execute the AI model, the terminal device may determine whether the M models match the AI capabilities of the M models. For example, if the expected completion time of the first AI model in the M models does not exceed the time budget requirement of the terminal device, the expected energy consumption does not exceed the energy consumption limit of the terminal device, and the ratio of resources expected to be used does not exceed the resource ratio limit of the terminal device, the terminal device may determine that the first AI model matches the AI capability of the terminal device. The time budget requirement of the terminal device may be time budget information that is sent by the network device and that is used by the terminal device to execute the AI model, or may be a local time budget requirement of the terminal device. The energy consumption limit of the terminal device may be a local energy consumption limit of the terminal device. The resource ratio limit of the terminal device may be a local resource ratio limit of the terminal device.

Further, the terminal device may send feedback information to the network device. For example, in step S502, the feedback information may indicate at least one AI model. Specifically, the terminal device may select at least one AI model from models that match the AI capability of the terminal device, and apply, by using the feedback information, for the network device to send the model. A selection principle of the terminal device may be shortest expected completion time, minimum expected energy consumption, a minimum ratio of resources expected to be used, or a random principle.

It should be noted that, in the embodiment shown in FIG. 6, for specific implementation processes of steps S500, S501, S502, and S503, refer to related descriptions in the embodiment shown in FIG. 5. Details are not described herein again.

In the foregoing embodiment, after the network device transfers the complexity of the to-be-delivered AI model to the terminal device, the terminal device can more conveniently, efficiently, and accurately evaluate a matching states between the to-be-delivered AI model and the AI capability of the terminal device, to determine whether to request to enable the AI model or request to deliver the AI model. In this way, accuracy and efficiency of evaluating a matching degree between the AI capability and the AI model by the terminal device are improved.

According to the method provided in this embodiment of this application, the terminal device may send the AI capability information of the terminal device to the network device, so that the network device accurately and efficiently evaluates the matching state between the AI model and the AI capability of the terminal device. Alternatively, the network device may send the AI model information to the terminal device, so that the terminal device accurately and efficiently evaluates the matching state between the AI model and the AI capability of the terminal device. In addition, according to the method provided in embodiments of this application, a matching degree of the AI capability and the AI model between the terminal device and the network device can be evaluated without introducing an additional server device and an interaction protocol.

It may be understood that, to implement the functions in the foregoing embodiments, the network device and the terminal device include corresponding hardware structures and/or software modules for performing the functions. A person skilled in the art should be easily aware that this application can be implemented by hardware or a combination of hardware and computer software in combination with the units and the method steps in the examples described in embodiments disclosed in this application. Whether a function is performed by hardware or hardware driven by computer software depends on particular application scenarios and design constraints of technical solutions.

FIG. 7 and FIG. 8 are schematic diagrams of possible structures of communication apparatuses according to embodiments of this application. These communication apparatuses may be configured to implement a function of the terminal device or the network device in the foregoing method embodiments, and therefore, can also implement beneficial effects of the foregoing method embodiments. In embodiments of this application, the communication apparatus may be a terminal device or a network device, or may be a module (for example, a chip) applied to the terminal device or the network device.

As shown in FIG. 7, a communication apparatus 700 includes a transceiver unit 701 and a processing unit 702. The processing unit 702 is configured to invoke the transceiver unit 701 to receive information about another communication apparatus or send information to the another communication apparatus. The transceiver unit 701 may further include a receiving unit and a sending unit. The receiving unit is configured to receive information about another communication apparatus, and the sending unit is configured to send information to the another communication apparatus. The communication apparatus 700 is configured to implement functions of the terminal device or the network device in the method embodiments shown in FIG. 3, FIG. 4, FIG. 5, or FIG. 6. The embodiment in FIG. 4 is based on the embodiment in FIG. 3, and the embodiment in FIG. 6 is based on the embodiment in FIG. 5. The following uses the embodiment in FIG. 3 and the embodiment in FIG. 5 as examples to describe operations performed by the transceiver unit 701 and the processing unit 702 respectively. For operations performed by the two units in other embodiments, refer to the method embodiments.

When the communication apparatus 700 is configured to implement the function of the terminal device in the method embodiment shown in FIG. 3, the transceiver unit 701 is configured to send AI capability information to the network device. The AI capability information includes time and/or energy consumption for the terminal device to execute each of the at least one reference AI unit. The processing unit 702 is configured to obtain the AI capability information. When the communication apparatus 700 is configured to implement the function of the network device in the method embodiment shown in FIG. 3, the transceiver unit 701 is configured to receive the AI capability information sent by the terminal device. The AI capability information includes the time and/or energy consumption for the terminal device to execute each of the at least one reference AI unit. The transceiver unit 701 is further configured to send configuration information to the terminal device. The configuration information indicates the terminal device to enable an AI communication mode, or the configuration information indicates at least one AI model, or the configuration information indicates a configuration parameter of at least one AI model, or the configuration information indicates a method for obtaining at least one AI model, and the at least one AI model is determined based on the AI capability information.

When the communication apparatus 700 is configured to implement the function of the terminal device in the method embodiment shown in FIG. 5, the transceiver unit 701 is configured to receive AI model information sent by the network device. The AI model information includes M groups of similarity information corresponding to M AI models, each group of similarity information in the M groups of similarity information is similarity information between one AI model of the M AI models and K reference AI units, and M and K are positive integers. The transceiver unit 701 is further configured to send feedback information to the network device based on the AI model information. When the communication apparatus 700 is configured to implement the function of the network device in the method embodiment shown in FIG. 5, the transceiver unit 701 is configured to send the AI model information to the terminal device. The AI model information includes the M groups of similarity information corresponding to the M AI models, each group of similarity information in the M groups of similarity information is similarity information between one AI model of the M AI models and K reference AI units, and M and K are positive integers. The transceiver unit 701 is further configured to receive the feedback information sent by the terminal device, where the feedback information is determined based on the AI model information.

For more detailed descriptions of the foregoing transceiver unit 701 and the processing unit 702, directly refer to related descriptions in the method embodiments shown in FIG. 3 and FIG. 5. Details are not described herein again.

Based on a same technical concept, as shown in FIG. 8, an embodiment of this application further provides a communication apparatus 800. The communication apparatus 800 includes an interface circuit 801 and a processor 802. The interface circuit 801 and the processor 802 are coupled to each other. It may be understood that the interface circuit 801 may be a transceiver or an input/output interface. Optionally, the communication apparatus 800 may further include a memory 803. The memory 803 is configured to store instructions executed by the processor 802, or store input data required by the processor 802 to run instructions, or store data generated after the processor 802 runs instructions.

When the communication apparatus 800 is configured to implement the methods shown in FIG. 3, FIG. 4, FIG. 5, and FIG. 6, the processor 802 is configured to implement a function of the processing unit 702, and the interface circuit 801 is configured to implement a function of the transceiver unit 701.

When the communication apparatus is a chip applied to a terminal device, the chip in the terminal device implements a function of the terminal device in the foregoing method embodiments. The chip in the terminal device receives information from another module (for example, a radio frequency module or an antenna) in the terminal device, and the information is sent by a network device to the terminal device. Alternatively, the chip in the terminal device sends information to another module (for example, a radio frequency module or an antenna) in the terminal device, and the information is sent by the terminal device to the network device.

It may be understood that the processor in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like.

Based on the foregoing embodiments, an embodiment of this application provides a communication system. The communication system may include the terminal device, the network device, and the like in the foregoing embodiments.

An embodiment of this application further provides a computer-readable storage medium. The computer-readable storage medium is configured to store a computer program. When the computer program is executed by a computer, the computer may implement the downlink scheduling method provided in the foregoing method embodiments.

An embodiment of this application further provides a computer program product. The computer program product is configured to store a computer program. When the computer program is executed by a computer, the computer may implement the downlink scheduling method provided in the foregoing method embodiments.

An embodiment of this application further provides a chip, including a processor. The processor is coupled to a memory, and is configured to invoke a program in the memory, so that the chip implements the downlink scheduling method provided in the foregoing method embodiments.

An embodiment of this application further provides a chip. The chip is coupled to a memory, and the chip is configured to implement the downlink scheduling method provided in the foregoing method embodiments.

The method steps in embodiments of this application may be implemented by hardware, or may be implemented in a manner of executing software instructions by the processor. The software instructions may include corresponding software modules, and the software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in the network device or the terminal device. Certainly, the processor and the storage medium may exist in the network device or the terminal device as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, all or some of the procedures or the functions in embodiments of this application are performed. The computer may be a general-purpose computer, a dedicated computer, a computer network, a network device, user equipment, or another programmable apparatus. The computer programs or instructions may be stored in a computer-readable storage medium or may be transmitted from a computer-readable storage medium to another computer-readable storage medium. For example, the computer programs or instructions may be transmitted from a website, computer, first device, or data center to another website, computer, first device, or data center in a wired or wireless manner. The computer-readable storage medium may be any usable medium accessible by the computer, or a data storage device, for example, a first device or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid state drive (solid state drive, SSD).

It is clear that a person skilled in the art can make various modifications and variations to embodiments of this application without departing from the scope of embodiments of this application. In this case, this application is intended to cover these modifications and variations of embodiments of this application provided that they fall within the scope of protection defined by the following claims and their equivalent technologies of this application.

## Claims

1. An artificial intelligence AI communication method, comprising:

   obtaining, by a first device, AI capability information, wherein the AI capability information comprises time and/or energy consumption for the first device to execute each of at least one reference AI unit; and
   sending, by the first device, the AI capability information to a second device.

2. The method according to claim 1, wherein after the sending, by the first device, the AI capability information to a second device, the method further comprises:
   receiving, by the first device, configuration information sent by the second device, wherein the configuration information indicates the first device to enable an AI communication mode, or the configuration information indicates at least one AI model, or the configuration information indicates a configuration parameter of at least one AI model, or the configuration information indicates a method for obtaining at least one AI model.

3. The method according to claim 1 or 2, wherein before the sending, by the first device, the AI capability information to a second device, the method further comprises:
receiving, by the first device, request information from the second device, wherein the request information is used to request the first device to send the AI capability information to the second device.

**4.** The method according to any one of claims 1 to 3, wherein the sending, by the first device, the AI capability information to a second device comprises:

periodically sending, by the first device, the AI capability information to the second device; or
sending, by the first device, the AI capability information to the second device when the first device accesses a network in which the second device is located; or
sending, by the first device, the AI capability information to the second device when the first device establishes a communication connection to the second device; or
sending, by the first device, the AI capability information to the second device when a computing resource used by the first device to execute an AI model changes.

**5.** An artificial intelligence AI communication method, comprising:
receiving, by a second device, AI capability information sent by a first device, wherein the AI capability information comprises time and/or energy consumption for the first device to execute each of at least one reference AI unit.

**6.** The method according to claim 5, wherein after the receiving, by a second device, AI capability information sent by a first device, the method further comprises:
sending, by the second device, configuration information to the first device, wherein the configuration information indicates the first device to enable an AI communication mode, or the configuration information indicates at least one AI model, or the configuration information indicates a configuration parameter of at least one AI model, or the configuration information indicates a method for obtaining at least one AI model.

**7.** The method according to claim 6, wherein when the configuration information indicates the at least one AI model, or the configuration information indicates the configuration parameter of the at least one AI model, or the configuration information indicates the method for obtaining the at least one AI model, before the sending, by the second device, configuration information to the first device, the method further comprises:
determining, by the second device, the at least one AI model based on the AI capability information.

**8.** The method according to any one of claims 5 to 7, wherein before the receiving, by a second device, AI capability information sent by a first device, the method further comprises:
sending, by the second device, request information to the first device, wherein the request information is used to request the first device to send the AI capability information to the second device.

**9.** The method according to claim 2 or 6, wherein the configuration information is response information of the AI capability information.

**10.** The method according to any one of claims 1 to 9, wherein time at which the first device executes a first reference AI unit in the at least one reference AI unit is a first time value, a first time level, or a first time range, and energy consumption for the first device to execute the first reference AI unit is a first energy consumption value, a first energy consumption level, or a first energy consumption range.

**11.** The method according to any one of claims 1 to 10, wherein the AI capability information comprises one or more of the following:

a quantity of input data used by the first device to execute each of the at least one reference AI unit;
numerical precision of the input data used by the first device to execute each of the at least one reference AI unit;
numerical precision of a weight of each of the at least one reference AI unit;
operation precision for the first device to execute each of the at least one reference AI unit;
an upper time limit value used by the first device to execute the AI model;
an upper energy consumption limit value used by the first device to execute the AI model; and
resource usage used by the first device to execute the AI model.

**12.** The method according to any one of claims 1 to 11, wherein resources used by the first device to execute each of the at least one reference AI unit are all available computing resources of the first device.

**13.** A first device, comprising one or more processors and one or more memories, wherein
the one or more memories are coupled to the one or more processors, the one or more memories are configured to store computer program code, the computer program code comprises computer instructions, and when the one or more processors execute the computer instructions, the first device is enabled to perform the method according to any one of claims 1 to 4 or any one of claims 9 to 12.

**14.** A second device, comprising one or more processors and one or more memories, wherein
the one or more memories are coupled to the one or more processors, the one or more memories are configured to store computer program code, the computer program code comprises computer instructions, and when the one or more processors execute the computer instructions, the second device is enabled to perform the method according to any one of claims 5 to 12.

**15.** A computer-readable storage medium, wherein the computer-readable storage medium stores computer-executable instructions, and when the computer-executable instructions are invoked by a computer, the computer is enabled to perform the method according to any one of claims 1 to 4 or any one of claims 9 to 12.

**16.** A computer program product comprising instructions, wherein when the computer program product runs on a computer, the computer is enabled to perform the method according to any one of claims 1 to 4 or any one of claims 9 to 12.

**17.** A chip, wherein the chip is coupled to a memory, and is configured to read and execute program instructions stored in the memory, to implement the method according to any one of claims 1 to 4 or any one of claims 9 to 12.

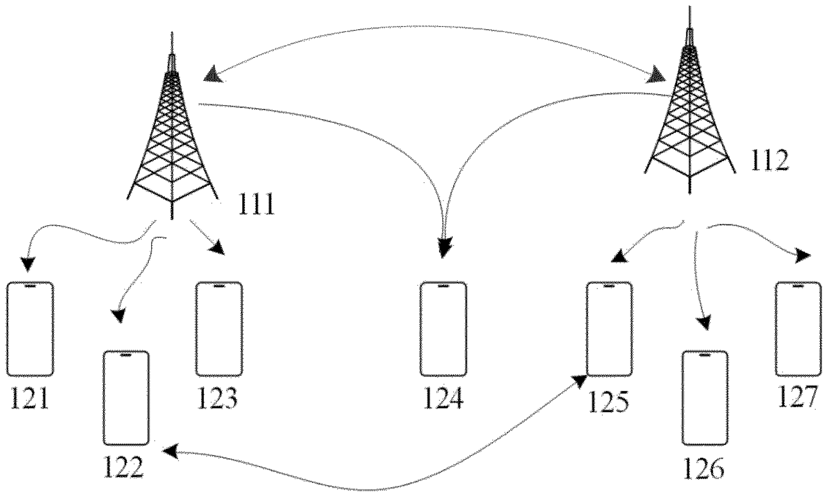


FIG. 1

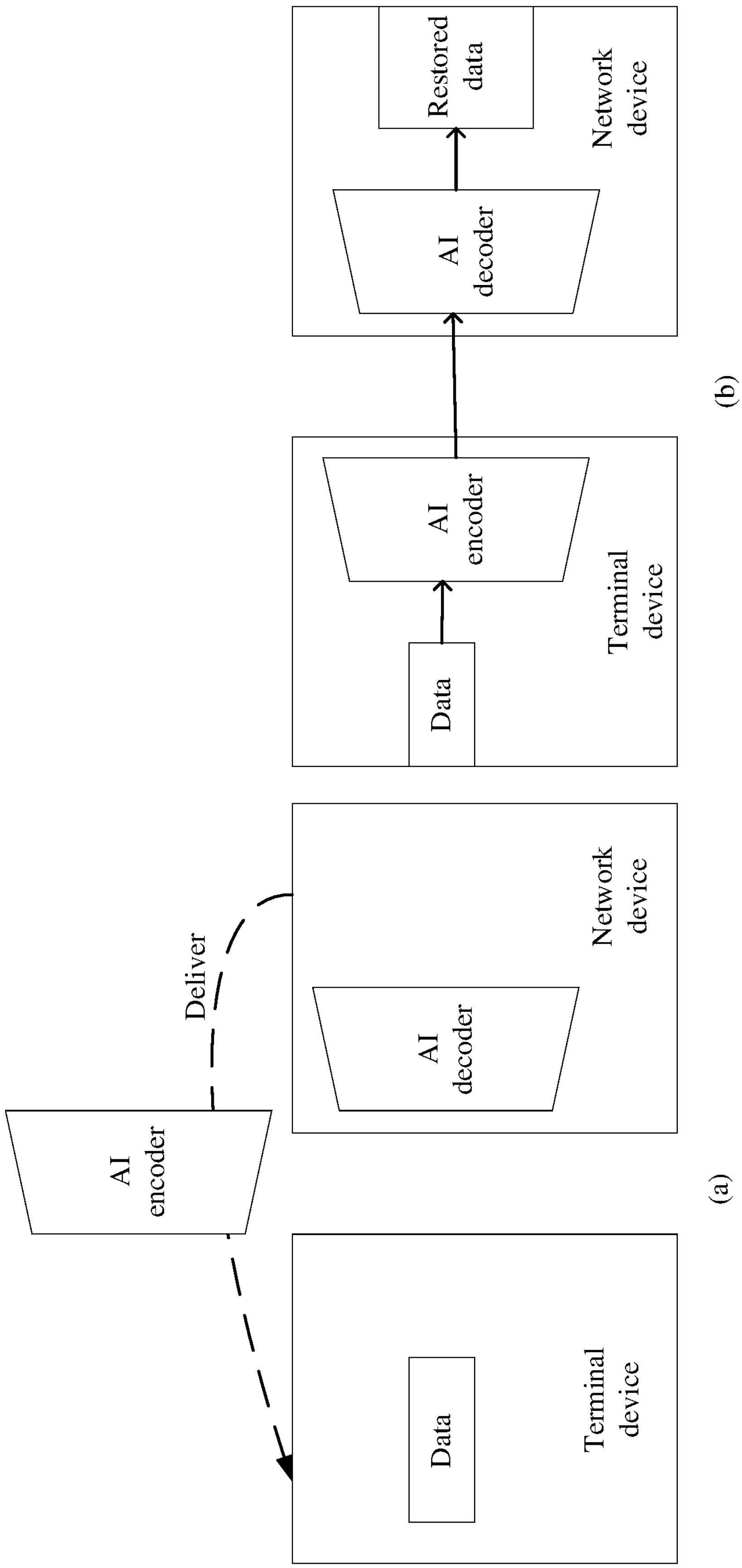
AI encoder
Deliver
AI decoder
Network device
Data
Terminal device
(a)
Data
AI encoder
Terminal device
AI decoder
Restored data
Network device
(b)

FIG. 2

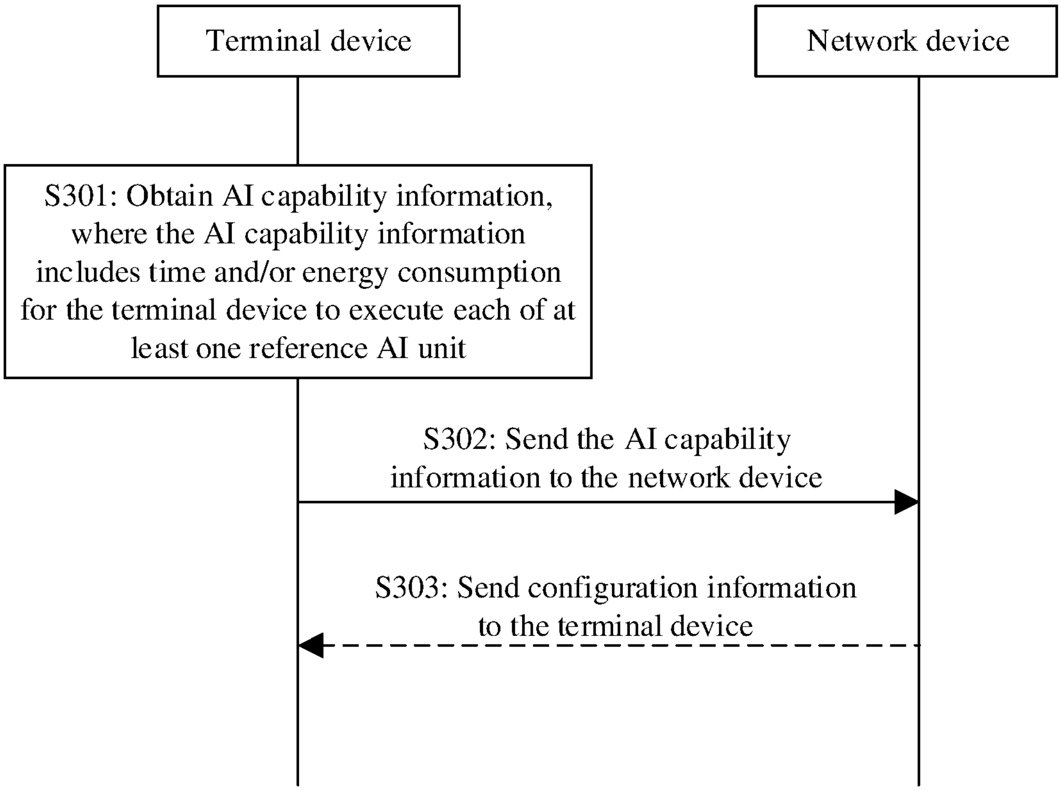
Terminal device
Network device
S301: Obtain AI capability information, where the AI capability information includes time and/or energy consumption for the terminal device to execute each of at least one reference AI unit
S302: Send the AI capability information to the network device
S303: Send configuration information to the terminal device

FIG. 3

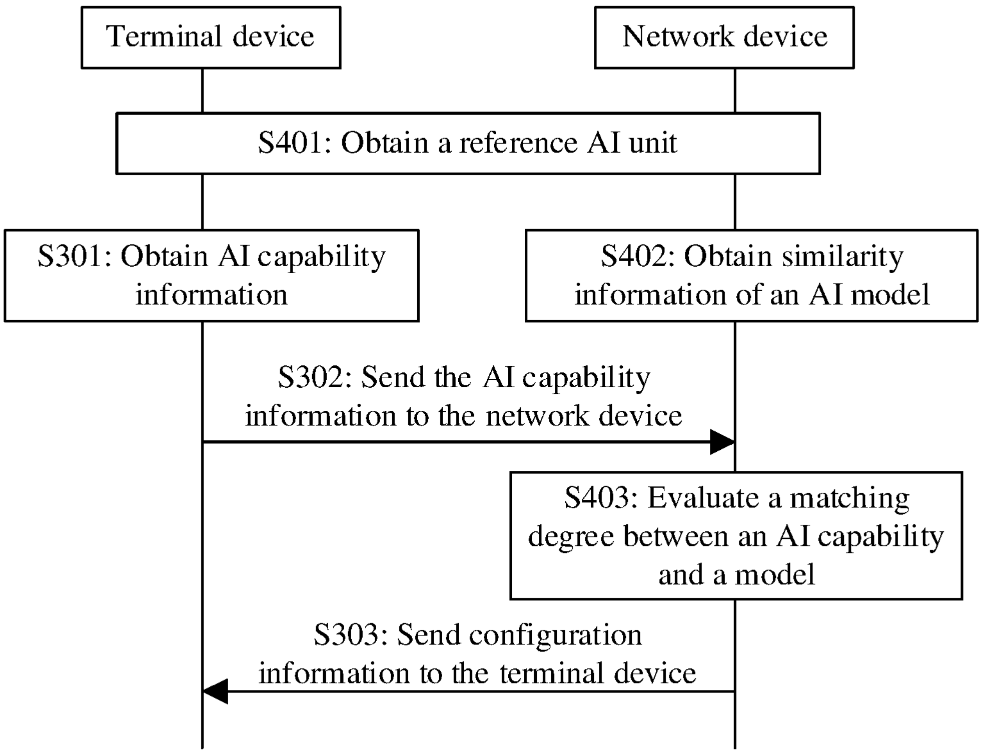
Terminal device
Network device
S401: Obtain a reference AI unit
S301: Obtain AI capability information
S402: Obtain similarity information of an AI model
S302: Send the AI capability information to the network device
S403: Evaluate a matching degree between an AI capability and a model
S303: Send configuration information to the terminal device

FIG. 4

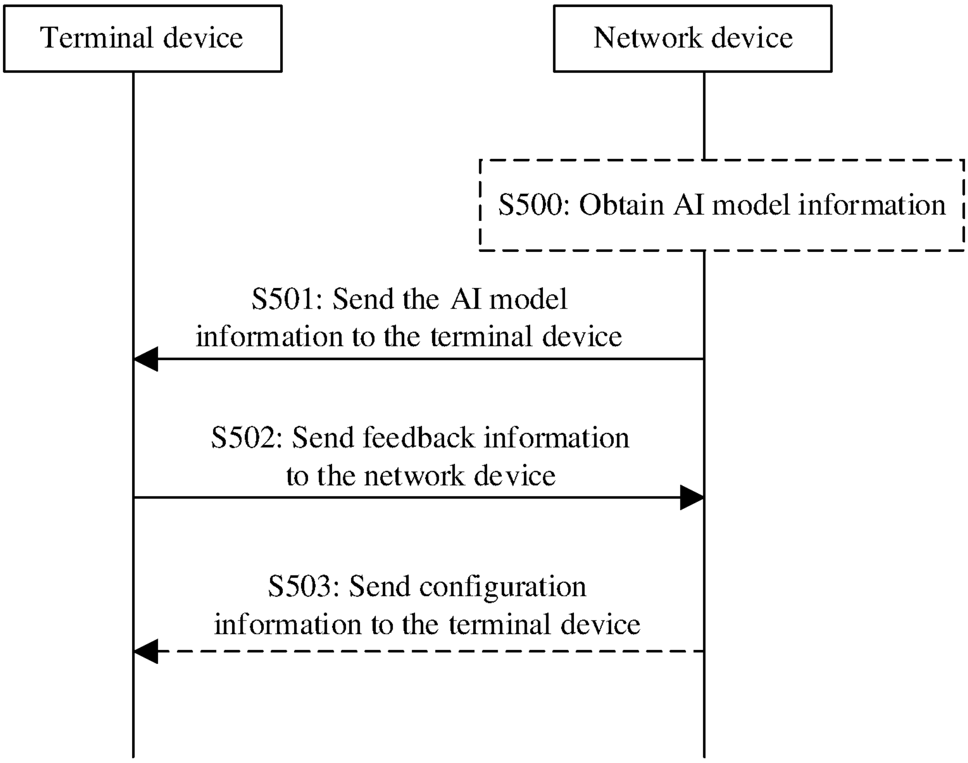
Terminal device
Network device
S500: Obtain AI model information
S501: Send the AI model information to the terminal device
S502: Send feedback information to the network device
S503: Send configuration information to the terminal device

FIG. 5

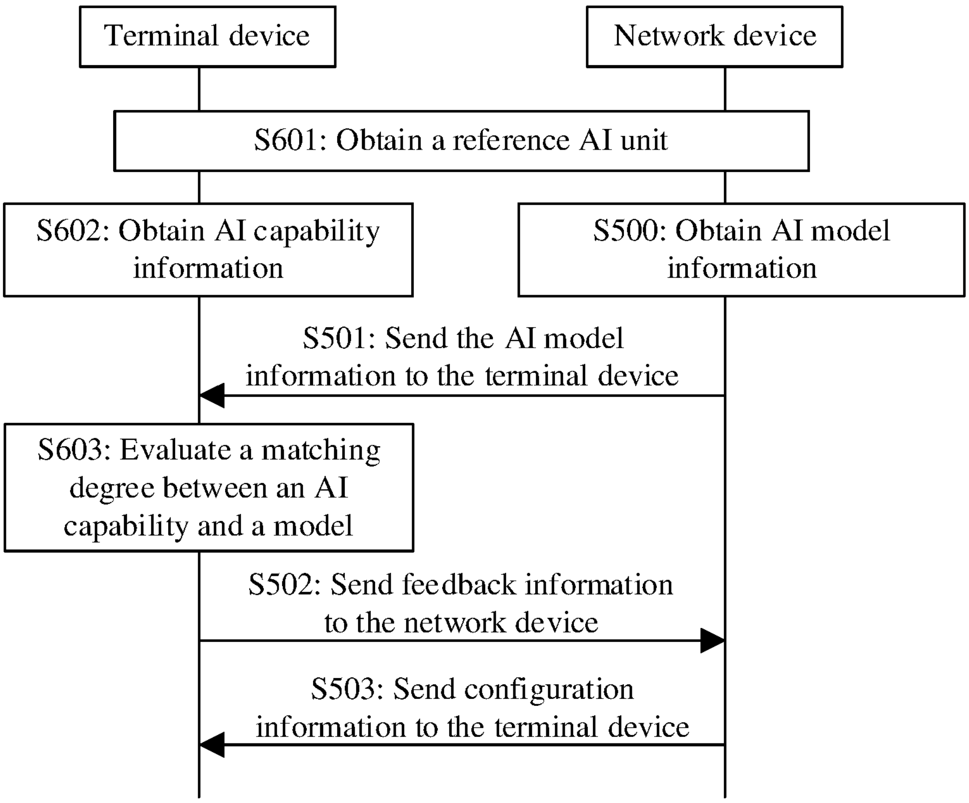
Terminal device
Network device
S601: Obtain a reference AI unit
S602: Obtain AI capability information
S500: Obtain AI model information
S501: Send the AI model information to the terminal device
S603: Evaluate a matching degree between an AI capability and a model
S502: Send feedback information to the network device
S503: Send configuration information to the terminal device

FIG. 6

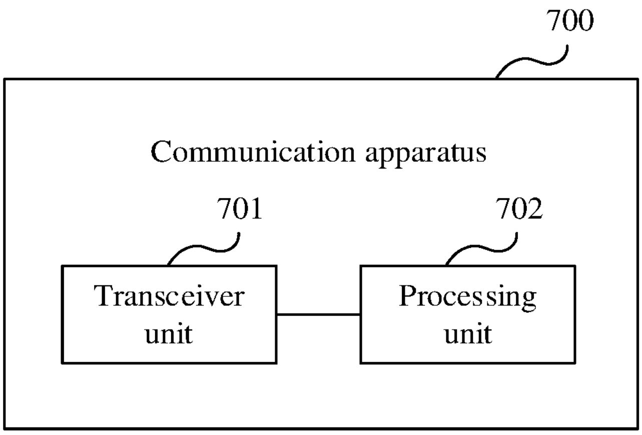
700
Communication apparatus
701
702
Transceiver unit
Processing unit

FIG. 7

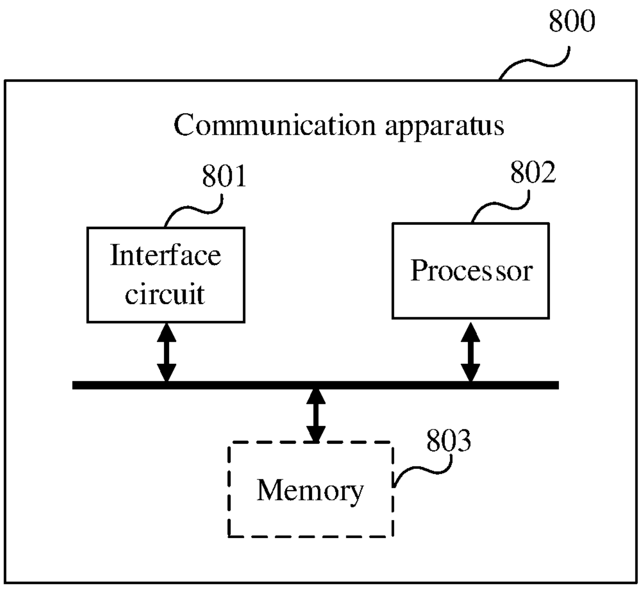
800
Communication apparatus
801
802
Interface circuit
Processor
803
Memory

FIG. 8

**INTERNATIONAL SEARCH REPORT**

International application No.
**PCT/CN2022/117147**

**A. CLASSIFICATION OF SUBJECT MATTER**

H04W 8/22(2009.01)i；H04W 8/24(2009.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: 人工智能, 能力, 时间, 能耗, 模型, 配置, 参数, Artificial Intelligence, AI, capability, ability, time, power, energy, consumption, model, configuration, parameter

**C. DOCUMENTS CONSIDERED TO BE RELEVANT**

| Category* | Citation of document, with indication, where appropriate, of the relevant passages | Relevant to claim No. |
|---|---|---|
| X | WO 2021142609 A1 (GUANGDONG OPPO MOBILE TELECOMMUNICATIONS CORP., LTD.) 22 July 2021 (2021-07-22)<br>description, page 3, line 23 to page 9, line 21 | 1-17 |
| X | WO 2021128746 A1 (HUAWEI TECHNOLOGIES CO., LTD.) 01 July 2021 (2021-07-01)<br>description, page 11, lines 29-32, and page 13, line 8 to page 14, line 4 | 1-17 |
| X | OPPO et al. "Update to Ammt Use Case - Session-specific Model Transfer Split Computation Decision Operation"<br>*3GPP TSG-SA WG1 Meeting #93e S1-210378,* 04 March 2021 (2021-03-04),<br>page 1, section [P.R.5.5-00x], and pages 2-4 | 1-17 |
| A | CN 112204532 A (HUAWEI TECHNOLOGIES CO., LTD.) 08 January 2021 (2021-01-08)<br>entire document | 1-17 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 October 2022** | **26 October 2022** |
| Name and mailing address of the ISA/CN<br>**China National Intellectual Property Administration (ISA/CN)**<br>**No. 6, Xitucheng Road, Jimenqiao, Haidian District, Beijing 100088, China**<br>Facsimile No. **(86-10)62019451** | Authorized officer<br><br>Telephone No. |

Form PCT/ISA/210 (second sheet) (January 2015)

**INTERNATIONAL SEARCH REPORT**
**Information on patent family members**

International application No.
**PCT/CN2022/117147**

| Patent document cited in search report | | | Publication date (day/month/year) | Patent family member(s) | | | Publication date (day/month/year) |
|---|---|---|---|---|---|---|---|
| WO | 2021142609 | A1 | 22 July 2021 | CN | 114930945 | A | 19 August 2022 |
| WO | 2021128746 | A1 | 01 July 2021 | WO | 2021128110 | A1 | 01 July 2021 |
| | | | | CN | 114788384 | A | 22 July 2022 |
| | | | | US | 20220322111 | A1 | 06 October 2022 |
| CN | 112204532 | A | 08 January 2021 | WO | 2020042112 | A1 | 05 March 2020 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202111085791
- CN 202111250477